# EUROPÄISCHE PATENTSCHRIFT

(11) **EP 2 550 106 B1**
(45) Veröffentlichungstag und Bekanntmachung des Hinweises auf die Patenterteilung: **11.09.2013**
(21) Anmeldenummer: 11713995.6
(22) Anmeldetag: 25.03.2011
(51) Int. Cl.: B02C 9/04, B02C 23/12, B02C 23/14, B02B 3/08, B02B 5/02

(54) **VERFAHREN UND VORRICHTUNG ZUM SCHÄLEN VON RAPSSAATEN**
METHOD AND DEVICE FOR DEHULLING RAPESEED
METHODE ET DISPOSITIF POUR DÉCORTIQUER LES SEMIS DE COLZA

(30) Priorität: 25.03.2010 DE 102010012822
(43) Veröffentlichungstag der Anmeldung: 30.01.2013
(73) Patentinhaber: Nyenhuis, Markus, 48485 Neuenkirchen (DE)
(72) Erfinder: Nyenhuis, Markus, 48485 Neuenkirchen (DE)
(74) Vertreter: Tarvenkorn, Oliver
(86) Internationale Anmeldenummer: PCT/EP2011/054589
(87) Internationale Veröffentlichungsnummer: WO 2011/117374

(56) Entgegenhaltungen:
- DE-A1- 4 041 994
- FR-A- 1 040 258
- FR-A5- 2 145 900
- US-A- 4 083 836

## Beschreibung

Die Erfindung betrifft ein Verfahren zum Schälen von Rapssaaten.

Aus dem Stand der Technik sind bereits Verfahren zum Schälen von Rapssaaten bekannt. So beschreibt die DE 40 41 994 B4 ein Verfahren und eine Vorrichtung zur Schälung von frischem Rapssaaten, bei der die Rapssaat vorab einer Reinigung und einer Klassifizierung zur Abtrennung von Mindergrößen unterworfen wird und im Abschluss daran mittels folgender nacheinander ablaufender Bearbeitungsschritte geschält wird. Zuerst wird ein Potentialunterschied des Wassergehaltes zwischen Schale und Kern des Saatgutes durch Reduzierung des Wassergehaltes im Saatgut um 0,6 bis 2,0 % durch Trocknung mit einer Verweilzeit des Saatgutes von 5 min. bei einer Temperatur von 95°C erzeugt. Danach erfolgt eine Druckbehandlung durch Walzung unter Verwendung eines Walzenschälers mit einem Walzspalt, der das 0,2 bis 0,4-fach des mittleren Saatgutdurchmessers beträgt. Darauf folgt das Schlagpralllösen der aufgebrochenen Schalen vom Kernfleisch durch pneumatische Förderung. Hierauf erfolgt eine Windsichtung zum Abscheiden der Fraktionen ungeschälter Kerne. Daran schließt sich die Sichtung und Trennung der Schalen von den Kernen durch Elektroseparation an.

Problematisch bei diesem Verfahren ist, dass die Rapssaat vor der Zuführung zum Schälprozess zuerst einer Reinigung oder einer Klassifizierung zur Abtrennung von Mindergrößen unterworfen werden muss. Diese zusätzlichen Bearbeitungsschritte verringern die Effizienz des Verfahrens und verteuern den Verfahrensablauf. Zudem kann durch den definierten Walzspalt nur eine bestimmte Korngröße von Rapssaaten aufgebrochen werden.

Die FR 1 040 258 offenbart eine Vorrichtung zum Schälen von Hülsenfrüchten. Genannt sind Arten mit sehr unterschiedlichen Durchmessern in einem Größenspektrum von etwa 5-6 mm (Erbse) bis 60 - 70 mm (*Aleurites*). Der Fachmann kann also aus dem bekannte Verfahren und dem offenbartem Mix an Früchten mit unterschiedlichen Größen und mal sehr harten und mal sehr weichen Schalen keine einheitliche Handlungsanweisung für eine nur sehr kleine Frucht wie Rapssaaten, also bereits aus der Schote entfernte Rapssaatkörner, erhalten. Rapskörner haben nämlich im Mittel nur einen Durchmesser von 1,5-2,5 mm. Die bekannte Schrift offenbart eine feste und eine drehende Mahlscheibe mit deutlichem Abstand zueinander vorgesehen sind, wobei der Abstand einstellbar sein soll.

Das bedeutet, dass es diesen Abstand in allen Betriebszuständen immer gibt. Die sehr kleinen Rapskörner würden durch diesen Abstandsraum einfach hindurch fallen.

Ausgehend von dieser Problemstellung ist es Aufgabe der Erfindung, ein Verfahren sowie eine Vorrichtung zur Schälung von Rapssaaten bereitzustellen, das ohne eine vorgeschaltete Trocknung und Sortierung auskommt und damit eine verbesserte Verfahrenseffizienz ermöglicht.

Diese Aufgabe wird erfindungsgemäß gelöst durch das Verfahren des Anspruchs 1 sowie die Vorrichtung gemäß Anspruch 10 und die Verwendung der Schalenanteile gemäß Anspruch 11. Weiterführende vorteilhafte Ausgestaltungen der Erfindung sind in den Unteransprüchen beschrieben.

Die erfindungsgemäße Prallmühle, ist eine Stiftscheibenmühle besonders bevorzugt eine Weitkammermühle mit Stiftscheiben, die zwei rotierbare Mahlscheiben, aufweist, die in einem Abstand d zueinander angeordnet sind, und bei der auf den Mahlscheiben eine Anzahl von Stiften angeordnet ist, die für den mechanischen Aufschluss bzw. das mechanische Aufbrechen der Schalenanteile der Rapssaaten verantwortlich sind, wenn sich bei geschlossener Mühle zumindest eine Mahlscheibe dreht.

Die beiden Mahlscheiben rotieren bevorzugt mit unterschiedlichen Drehzahlen, so dass Anhaftungen von Kernfleisch und/oder Schalenanteilen verhindert werden.

Vorteilhafterweise kann durch dieses Verfahren eine breitere Rohstoffbasis an Rapssaaten für die Schälung verwendet werden, da eine Vorabsortierung der Rapskörner hinsichtlich der Größe nicht zu erfolgen hat. Des Weiteren ist es insbesondere bei einer nachfolgenden Kalt- bzw. Warm- bzw. Heißpressung in einer ölmühle zur Herstellung von Rapsöl möglich, dass sich durch den geringeren Schalenanteil, der sich mit diesem erfindungsgemäßen Verfahren erzielen lässt, eine verbesserte Qualität des gepressten Öls möglich, da z.B. aufgrund der höheren Reinheit der eingesetzten Kernfleischanteile weniger Störstoffe im Öl verbleiben und so z. B. der Aufwand für eine Raffination des gewonnen Öles vermindert werden kann. Des Weiteren kann aufgrund des Futterwertes ein höherer Anteil in der Futtermittelration erreicht und z.B. Sojaschrot in erhöhtem Maße substituiert werden.

Der Presskuchen, der nach dem Pressvorgang in der Ölmühle anfällt, kann aufgrund des geringen Schalenanteils als hochwertiges Futtermittel mit einem verringerten Rohfasergehalt und einem erhöhten Proteingehalt für die Tierfütterung verwendet werden. Aufgrund des gesteigerten Futterwertes dieses Presskuchens kann so auch die Transportwürdigkeit des Presskuchens erhöht werden.

Vorteilhafterweise kann zudem die Verarbeitungskapazität einer Ölmühle, die nach dem erfindungsgemäßen Verfahren produzierte Kernfleischanteile auspresst und/oder extrahiert, gesteigert werden, da ein Großteil der Schalenanteile durch das erfindungsgemäße Verfahren vorab aussortiert wird und ein vergleichsweise höherer Anteil an Kernfleisch in die Ölmühle gelangt, die dann eben nicht durch Schalenanteile belastet wird. Auf diese Weise lässt sich die Effektivität einer nachgeschalteten Ölmühle steigern, insbesondere der Durchsatz einer solchen Ölmühle erhöhen.

Insbesondere bei der Verwendung der Kernfleischanteile in einer Heiß- oder Warmpressung zur Herstellung von Ölen kann eine Lösemittelextraktion nachgeschaltet sein, um Restölbestandteile (Restfettanteile) aus dem Presskuchen herauszulösen. Als Lösemittel kann hierbei Hexan verwendet werden, das auf dem Presskuchen aufgebracht wird und dadurch den bestehenden Restfettgehalt von 18 - 24 % durch diese Lösemittelextraktion auf einen Restfettgehalt im verbleibenden Schrot aufs ≤ 1 % senken kann.

Insbesondere bei großen Ölmühlen hat die Senkung des Restfettgehaltes einen erheblichen Gewinn steigernden Effekt, da aus diesem Restfett ebenfalls wertvolle Produkte gewonnen werden können. Werden in einem solchen Lösemittelextraktionsverfahren Presskuchen mit einem hohen Schalenanteil eingesetzt, so haben diese Presskuchen eine höhere Verweildauer in der Extraktionsvorrichtung, da das Lösemittel (Hexan) weniger effektiv auf den Presskuchen einwirken kann, da dieser immer noch Schalenanteile enthält, die ebenfalls von Hexan benetzt werden. Dadurch wird die Effektivität der Fettlösung aus dem Presskuchen verringert.

Insbesondere der Vergleich zum Stand der Technik gemäß der DE 40 41 994 B4 kann das erfindungsgemäße Verfahren auch im großtechnischen Maßstab angewendet werden, da keine besonderen Ansprüche an den Feuchtigkeitsgehalt der Saat und an die Größenverteilung der Rapssaaten gestellt werden. Vorteilhafterweise kann durch das erfindungsgemäße Verfahren der Verarbeitungsaufwand bei der Schälung der Rapssaaten sowie im nachgeschalteten Ölherstellungsprozess gesenkt werden.

Vorteilhafterweise können Schalenanteile oder Rapssaaten, die beim Siebvorgang in der Siebvorrichtung aussepariert werden konnten, zur weiteren Verkleinerung bzw. zum Aufbrechen der Schale erneut in eine oder mehrer Prallmühlen eingeführt werden. Bei diesem zweiten Einführvorgang der Schalenanteile oder der noch nicht aufgebrochener Rapssaaten können diese ein weiteres Mal zerkleinert bzw. aufgebrochen werden.

In erfindungsgemäßer Weise ist vorgesehen, dass eine Sichtungsvorrichtung eine Windsichtungsvorrichtung, vorzugsweise eine sogenannte Zick-Zack-Windsichtungsvorrichtung, vorgesehen werden kann. Es ist ebenfalls auch möglich eine sogenannte elektromagnetische Sichtungsvorrichtung zu verwenden. Darüber hinaus ist es denkbar, auch andere bekannte Sichtungsvorrichtungen einzusetzen. Durch die Sichtungsvorrichtung wird bereits ein Großteil des Kernfleisches von den Schalen der Stammteile getrennt. Dies geschieht derart, dass die Schalenanteile mit dem Windstrom bzw. Luftstrom, der in die Windsichtungseinrichtung eingeführt wird ausgetragen werden und die schwereren Kernfleischanteile, die nicht vom Wind- bzw. Luftstrom getragen werden können auf den Boden der Windsichtungsvorrichtung herunterfallen und aus der Windsichtungsvorrichtung hinausgeführt werden können.

Vorteilhafterweise kann als Siebeinrichtung eine sogenannte Taumelsiebvorrichtung vorzugsweise mit mindestens einem Siebdeck besonders bevorzugt jedoch mit zwei oder mehr Siebdecks verwendet werden. Diese Siebdecks weisen ebenfalls eine Siebfläche auf, die eine bestimmte Maschenweite aufweist.

Es ist jedoch auch möglich, anstelle einer Taumelsiebvorrichtung einen sogenannten Siebsichter, ein Schwingsieb oder ein Zyklonensieb zur Siebung der Schalenanteile zu verwenden. Bei der Siebung der Schalenanteile wird versucht, die den Schalenanteilen noch anhaftenden Kernfleischanteile zu lösen, die im Windsichtungsverfahren nicht herausgelöst werden konnten.

Die Siebflächen, die bei der Taumelsiebvorrichtung verwendet werden, sind bei der Taumelsiebvorrichtung übereinander in sogenannten Siebdecks angeordnet, wobei die obere Siebfläche (oberes Siebdeck) jeweils eine größere Maschenweite aufweist als die untere Siebfläche. Dabei können die Siebflächen beispielsweise eine Maschenweite von 1,0 mm bis 0,6 mm aufweisen.

Dabei ist es vorteilhaft, wenn der Abstand d zwischen den Mahlscheiben 40 bis 60 mm beträgt, wobei dann die Stiftlänge der Stifte der Stiftscheiben 40 bis 50 mm beträgt. Es ist möglich die Rapssaaten durch das Zentrum oder radial in die die Stiftscheibenmühle, einzuführen.

Zur Problemlösung wird außerdem eine Vorrichtung zur Durchführung des Verfahrens vorgeschlagen, die mindestens eine Prallmühle eine Sichtungsvorrichtung und eine Siebvorrichtung zur Durchführung des Verfahrens aufweist.

Mit dieser erfindungsgemäßen Kombination von Prallmühle, Sichtungsvorrichtung und Siebvorrichtung kann das erfindungsgemäße Verfahren durchgeführt werden.

Es hat sich gezeigt, dass die Schalenanteile, die bei dem erfindungsgemäßen Verfahren anfallen, besonders gut dafür geeignet sind, als Biomasse für eine Festbrennstofffeuerungsanlage, insbesondere für eine Biomassenfeuerungsanlage, zur Erzeugung von thermischer Energie verwendet zu werden. Dies ist besonders vorteilhaft, da die industrielle Verarbeitung von Raps einen hohen energetischen Aufwand erfordert.

Ebenso kann der Bedarf an thermischer Energie, der sehr hoch ist, da die gesamte Saat auf mehr als 100°C erhitzt bzw. aufgeschlossen werden muss, um das enthaltende Öl optimiert gewinnen zu können, durch die Verbrennung der Schalenanteile gedeckt werden.

Insbesondere kann für die Bereitstellung der thermischen Energie ein betriebsintegriertes Kraftwerk in einer Ölmühle betrieben werden. Dieses Kraftwerk kann dabei z. B. aus einer Biomassefeuerung bestehen, an die eine sogenannte ORC-Anlage (Organic Rankine Anlage) gekoppelt ist. Dabei wird thermische Energie sowie elektrische Energie durch eine Kraft-Wärme-Kopplung generiert.

Mit den Schalenanteilen, die bei dem erfindungsgemäßen Verfahren anfallen, ist es möglich, dieses Kraftwerk zu betreiben und so extern zu beziehende Energieträger z. B. biologische Energieträger wie beispielsweise Holz oder fossile Energieträger zu substituieren. Anhand bisher durchgeführter Versuche ist es möglich, daws die Schalenanteile die ansonsten extern zu beziehende Biomassen oder fossilen Energieträger vollständig ersetzen kann bzw. mehr Schalenanteile zur Verfügung stehen als zur Energieerzeugung für das erfindungsgemäße Verfahren sowie für den Betrieb der Ölmühle benötigt werden.

Überschüssige Schalenanteile könnten sogar gewinnbringend veräußert werden. Mit der Schalenfraktion, die mit dem erfindungsgemäßen Verfahren erzeugt wird, kann also die gesamte Energie für die industrielle Verarbeitung von Raps, nämlich für die Durchführung des erfindungsgemäßen Verfahrens und eine anschließende Ölmüllerei z. B. Heiß- bzw. Warmpressung oder auch eine Kaltpressung, zur Verfügung gestellt werden, ohne dass weitere bzw. andere Energieträger zugekauft werden müssen.

Anhand von Zeichnungen sollen Ausführungsbeispiele der Erfindung näher erläutert werden. Es zeigen:
- Fig. 1: eine schematische Darstellung eines Durchflussschemas der Rapssaaten durch die einzelnen Bestandteile der erfindungsgemäßen Vorrichtung zur Schälung von Rapssaaten;
- Fig. 2: ein Schaubild mit der Bezeichnung der einzelnen Verfahrensschritte des erfindungsgemäßen Verfahrens und
- Fig. 3: das Schaubild aus Fig. 2 mit einem zusätzlichen Verfahrensschritt.

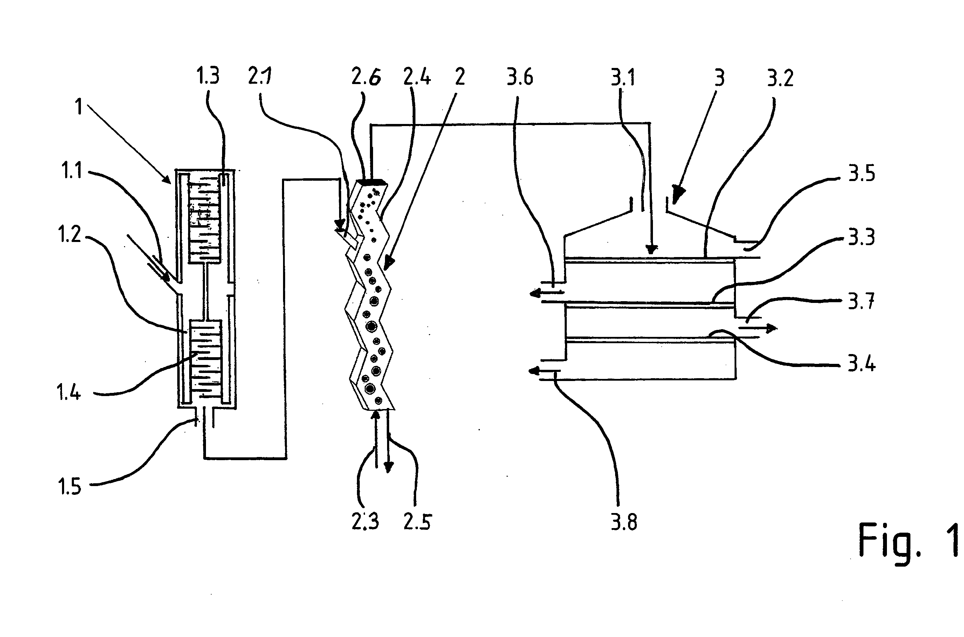

Fig. 1 zeigt eine Prallmühle, die hier als Stiftscheibenmühle 1 ausgebildet ist. Die Stiftscheibenmühle weist einen Scheibenmühleneingang 1.1 auf, durch den die Rapssaaten in die Mühle gelangen (siehe Pfeil). Durch die Drehung der beiden Mahlscheiben 1.2 und 1.3, die einen Durchmesser von 150 bis 1.000 mm aufweisen können und die eine Vielzahl von Stiften 1.4 aufweisen, erfolgt das mechanische Aufbrechen der Rapssaaten in der Stiftscheibenmühle 1. Das so gewonnene Mahlgut verlässt durch den Scheibenmühlenausgang 1.5 die Stiftscheibenmühle 1 und gelangt in den Mahlguteingang 2.1 der nachgeschalteten Sichtungsvorrichtung 2, die hier als sogenannte Zick-Zack-Sichtungsvorrichtung ausgebildet ist.

Diese Zick-Zack-Windsichtungsvorrichtung 2 weist einen Lufteinlass auf, durch den ein Luftstrom 2.3 in die Windsichtungsvorrichtung gelangt. Durch diesen Wind- bzw. Luftstrom wird das in die Sichtungsvorrichtung 2 geleitete Mahlgut, bestehend aus Kernfleischanteilen und Schalenanteilen separiert. Das heißt, dass die schwereren Kernfleischanteile, die sehr geringe Schalenanteile aufweisen auf dem schräg verlaufenden Boden der Zick-Zack-Windsichtungsvorrichtung liegenbleiben und aus dem Kernfleischausgang 2.5 der Sichtungsvorrichtung 2 ausgetragen werden können, um beispielsweise direkt einer nachfolgenden Kalt-, Heiß- oder Warmpressung in einer Ölmühle zugeführt zu werden.

Die leichteren Schalenanteile des Mahlgutes werden aufgrund des Luft- bzw. Windstromes entlang der im Zick-Zack verlaufenden Leitbleche 2.4 innerhalb der Sichtungsvorrichtung 2 nach oben befördert und verlassen die Sichtungsvorrichtung 2 aus dem Schalenanteilausgang 2.6.

Diejenigen Schalenanteile, die die Windsichtungsvorrichtung 2 verlassen haben, gelangen über den Schalenanteileingang 3.1 in eine Siebvorrichtung 3, die hier als Taumelsiebvorrichtung ausgebildet ist. Die Taumelsiebvorrichtung weist ein erstes Siebdeck 3.2, ein zweites Siebdeck 3.3 sowie ein drittes Siebdeck 3.4 auf. Die Siebdecks 3.2 ... 3.4 weisen jeweils eine Siebfläche mit einer bestimmten Maschenweite auf.

Die Maschenweite der Siebfläche des ersten Siebdecks 3.2 beträgt 1,0 mm und die Maschenweite beim dritten Siebdeck 3.4 beträgt 0,6 mm. Die Maschenweite der Siebfläche des zweiten Siebdecks 3.3 liegt im Bereich zwischen 1,0 und 0,6 mm.

Durch die Siebvorrichtung 3 kann erreicht werden, dass die noch in den Schalenanteilen befindlichen Kernfleischreste, die beim Windsichtungsvorgang nicht ausreichend vom Schalenanteil getrennt werden konnten, durch die Taumelsiebvorrichtung weiter herausgelöst werden können, sodass unterhalb des dritten Siebdecks 3.4 diejenigen Kernfleischanteile gesammelt werden können, welche durch die Behandlung in der Taumelsiebvorrichtung aus dem Schalenanteil herausgelöst werden können.

Auf den Siebdecks 1 und 2 verbleiben Schalenanteile, die aus der Siebvorrichtung über die Ausgänge 3.7 und 3.6 entweder zurück in die Prallmühle, insbesondere in die Stiftscheibenmühle, eingeführt werden können oder als Biomasse für eine Festbrennstofffeuerungsanlage verwendet werden können. Es ist auch möglich, dass Schalenanteile bereits oberhalb des ersten Siebdecks 3.2 aus dem Ausgang 3.5 aus der Siebvorrichtung herausgefördert werden können und ebenfalls entweder direkt der Stiftscheibenmühle oder einer weiteren Verwendung als Biomasse in einer Festbrennstofffeuerungsanlage, insbesondere einer Biomassenfeuerung, zugeführt werden können.

Sofern beim Mahlvorgang in der Stiftscheibenmühle 1 Rapssaaten nicht aufgebrochen worden sind, können diese - sofern sie in die Siebvorrichtung 3 gelangen - aussortiert werden und zum weiteren Aufmahlen in die Stiftscheibenmühle verbracht werden.

Der Abstand d zwischen den Mahlscheiben 1.2 und 1.3 ist abhängig von der Länge der Stifte 1.4. Bei Versuchen hat sich gezeigt, dass mit einer Stiftlänge von 40 - 50 mm und einem Anstand von 50 - 60 mm gute Ergebnisse bezüglich des Aufbrechens der Rapssaaten erzielt werden konnten.

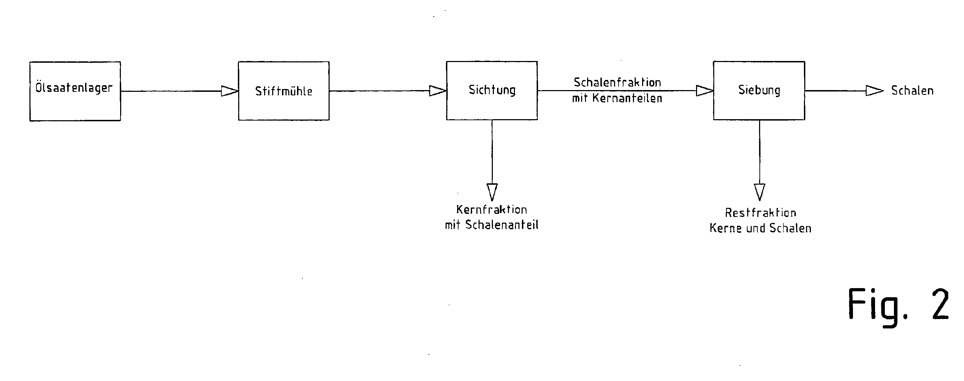

Fig. 2 zeigt noch einmal die einzelnen Verfahrensschritte des erfindungsgemäßen Verfahrens beginnend mit der Bereitstellung der Ölsaaten, insbesondere der Rapssaaten, in einem Ölsaaten bzw. Rapssaatenlager.

Von diesem Lager gelangen die Rapssaaten in die Stiftmühle (Prallmühle, Stiftscheibenmühle) wo sie durch einen Mahlvorgang aufgebrochen werden. Das so erzeugte Mahlgut gelangt in eine Sichtungsvorrichtung und wird dort gesichtet.

Nach der Sichtung steht eine sogenannte Kernfraktion mit Schalenanteil zur Verfügung, die sich aus einem überwiegenden Kernfleischanteil mit einem nur geringfügigen Schalenanteil zusammensetzt. Des Weiteren steht eine Schalenfraktion zur Verfügung, die nur einen geringen Kernanteil aufweist. Die Schalenfraktion mit nur einem geringfügigen Kernfleischanteil wird zur weiteren Herauslösung der Kernfleischanteile in eine nachgeschaltete Siebvorrichtung gegeben, in welcher der Restkernfleischanteil aus den Schalen herausgelöst wird und die Schalen von der verbleibenden Restfraktion bestehend aus Kernfleisch und Schalen separiert werden.

Der in der Kernfraktion und der Restfraktion verbleibende Schalenanteil ist sehr gering und stört den weiteren Ölherstellungsprozess in einer Ölmühle kaum. Die nach der Siebung zur Verfügung stehenden Schalen können als Biomasse in einer Festbrennstofffeuerungsanlage eingesetzt werden.

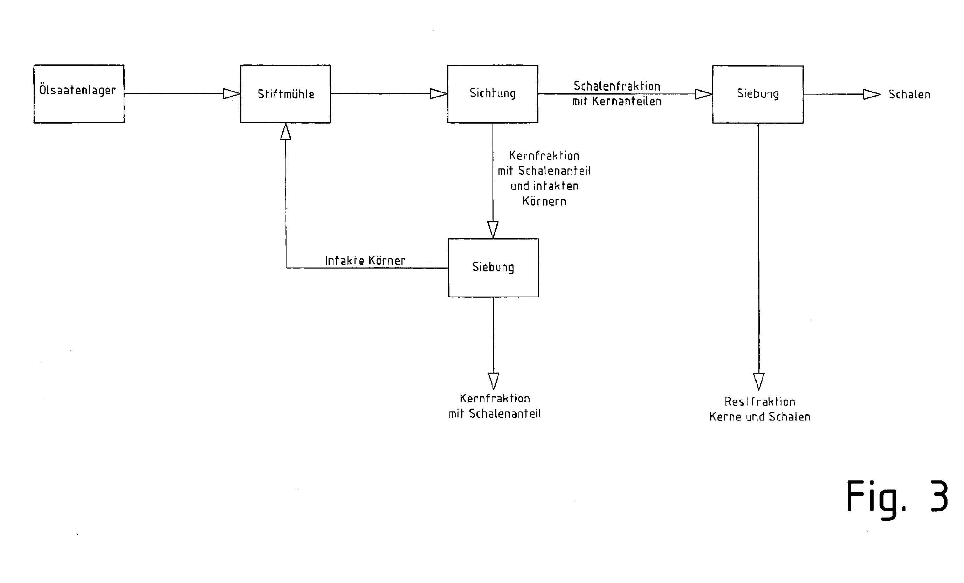

Fig. 3 zeigt eine Alternative des Verfahrensablaufs zur Fig. 2, bei dem im Sichtungsvorgang eine Kernfraktion mit Schalenanteil und intakten Körnern aussepariert und einem separaten Siebvorgang zugeführt wird. In dem Siebvorgang werden die intakten , nicht aufgebrochenen Körner heraus gesiebt und wieder in die Stiftscheibenmühle) zum Aufbrechen der Schalen eingeführt. Die verbleibende Kernfleischfraktion mit geringen Schalenanteilen kann dann einer Ölmühle zur Erzeugung von Rapsöl zugeführt werden.

Die nach der Siebung verbleibenden Schalen können, wie bereits unter Fig. 2 beschrieben, als Biomasse in einer Festbrennstofffeuerungsanlage eingesetzt werden.

### Bezugszeichenliste

- 1: Stiftscheibenmühle (Prallmühle)
- 1.1: Scheibenmühleneingang
- 1.2: Mahlscheibe
- 1.3: Mahlscheibe
- 1.4: Stift
- 1.5: Stiftscheibenmühlenausgang
- 2: Sichtungsvorrichtung
- 2.1: Mahlguteingang
- 2.3: Luft- bzw. Windstrom
- 2.4: Leitblech
- 2.5: Kernfleischanteilausgang
- 2.6: Schalenanteilausgang
- 3: Siebvorrichtung
- 3.1: Schalenanteileingang
- 3.2: Erstes Siebdeck
- 3.3: Zweites Siebdeck
- 3.4: Drittes Siebdeck
- 3.5: Ausgang
- 3.6: Ausgang
- 3.7: Ausgang
- 3.8: Ausgang

## Patentansprüche

1. Verfahren zum Schälen von Rapssaaten, mindestens aufweisend die folgenden Schritte:
- Bereitstellen von Rapssaaten aus Rapskörnern aufweisend einen Schalenanteil und Kernfleisch,
- Einführen der Rapssaaten in eine Prallmühle (1),
- Mechanisches Aufbrechen der Schalenanteile der Rapssaaten in der Prallmühle (1),
- Ausführen des Mahlgutes, bestehend aus aufgebrochenen Schalen- und Kernfleischanteilen, aus der Prallmühle (1),
- Einführen des Mahlgutes in eine Sichtungsvorrichtung (2) und Separation der Schalenanteile von den Kernfleischanteilen,
- Ausführen der Schalenanteile und der Kernanteile aus der Sichtungsvorrichtung (2),
- Einführen der Schalenanteile in eine Siebvorrichtung (3) zur weiteren Separation von Kernfleischresten aus den Schalenanteilen,
- Separates Ausführen von Schalenanteilen und Kernfleischanteilen aus der Siebvorrichtung (2),
**dadurch gekennzeichnet, dass** als Prallmühle eine Stiftscheibenmühle verwendet wird, die mindestens zwei rotierbare Mahlscheiben (1.2, 1.3) aufweist, die in einem Abstand d zueinander angeordnet sind und die mit ihren Stiften ineinander greifen, und die mit unterschiedlichen Drehzahlen rotieren.

2. Verfahren zum Schälen von Rapssaaten nach Anspruch 1, **dadurch gekennzeichnet, dass** Schalenanteile wieder in die Prallmühle (1) eingeführt werden.

3. Verfahren zum Schälen von Rapssaaten nach Anspruch 1 oder 2, **dadurch gekennzeichnet, dass** als Sichtungsvorrichtung (2) eine Windsichtungsvorrichtung, vorzugsweise eine Zick-Zack-Windsichtungsvorrichtung, oder eine elektromagnetische Sichtungsvorrichtung verwendet wird.

4. Verfahren zum Schälen von Rapssaaten nach einem der Ansprüche 1 bis 3, **dadurch gekennzeichnet, dass** als Siebeinrichtung (3) eine Taumelsiebvorrichtung verwendet wird, vorzugsweise mit mindestens einem Siebdeck (3.2, 3.3, 3.4) mit einer Siebfläche, besonders bevorzugt mit zwei oder mehr Siebdecks mit jeweils einer Siebfläche.

5. Verfahren zum Schälen von Rapssaaten nach einem der Ansprüche 1 bis 3, **dadurch gekennzeichnet, dass** als Siebeinrichtung (3) ein Siebsichter, ein Schwingsieb oder ein Zyklonsieb verwendet wird.

6. Verfahren zum Schälen von Rapssaaten nach Anspruch 4, **dadurch gekennzeichnet, dass** die Siebflächen übereinander angeordnet werden, wobei die obere Siebfläche jeweils eine größere Maschenweite aufweist als die untere Siebfläche.

7. Verfahren zum Schälen von Rapssaaten nach Anspruch 6, **dadurch gekennzeichnet, dass** Siebflächen mit einer Maschenweite von maximal 3 mm, vorzugsweise 1,0 mm bis 0,6 mm verwendet werden.

8. Verfahren zum Schälen von Rapssaaten nach einem oder mehreren der voranstehenden Ansprüche, **dadurch gekennzeichnet, dass** als Stiftscheibenmühle eine Weitkammermühle mit Stiftscheiben verwendet wird.

9. Verfahren zum Schälen von Rapssaaten nach wenigstens einem der vorhergehenden Ansprüche, **dadurch gekennzeichnet, dass** zwischen den Mahlscheiben (1.2, 1.3) ein Abstand d von maximal 200 mm, vorzugweise 40 - 60 mm eingestellt wird.

10. Verfahren zum Schälen von Rapssaaten nach wenigstens einem der vorhergehenden Ansprüche, **dadurch gekennzeichnet, dass** die Stiftlänge der Stifte der Stiftscheibenmühle maximal 200 mm, vorzugweise 40 - 50 mm beträgt.

11. Vorrichtung zur Durchführung des Verfahrens gemäß einem oder mehreren der vorangehenden Ansprüche, die mindestens eine Stiftscheibenmühle (1), eine Sichtungsvorrichtung (2) und eine Siebvorrichtung (3) aufweist.

12. Verwendung der Schalenanteile gewonnen aus dem Verfahren gemäß einem oder mehreren der Ansprüche 1 bis 10, **dadurch gekennzeichnet, dass** die Schalenanteile als Biomasse für eine Festbrennstofffeuerungsanlage zur Erzeugung von thermischer Energie verwendet wird.

## Claims

1. Method for dehulling rapeseeds, at least having the following steps of:
- providing rapeseeds from rapeseed grains having a hull part and a kernel,
- introducing the rapeseeds into an impact mill (1),
- mechanically breaking up the hull parts of the rapeseeds in the impact mill (1),
- removing the ground material, consisting of broken-up hull and kernel parts, from the impact mill (1),
- introducing the ground material into a classifying apparatus (2) and separating the hull parts from the kernel parts,
- removing the hull parts and the kernel parts from the classifying apparatus (2),
- introducing the hull parts into a screening apparatus (3) for further separating kernel remainders from the hull parts,
- separately removing hull parts and kernel parts from the screening apparatus (3),
**characterized in that** the impact mill used is a pin-disc mill which has at least two rotatable grinding discs (1.2, 1.3) which are arranged at a distance d apart and which engage in one another by way of their pins, and which rotate at different speeds.

2. Method for dehulling rapeseeds according to Claim 1, **characterized in that** hull parts are reintroduced into the impact mill (1).

3. Method for dehulling rapeseeds according to Claim 1 or 2, **characterized in that** the classifying apparatus (2) used is an air classifying apparatus, preferably a zigzag air classifying apparatus, or an electromagnetic classifying apparatus.

4. Method for dehulling rapeseeds according to one of Claims 1 to 3, **characterized in that** the screening device (3) used is a tumble screening apparatus, preferably having at least one screen deck (3.2, 3.3, 3.4) having a screening area, particularly preferably having two or more screen decks having in each case one screening area.

5. Method for dehulling rapeseeds according to one of Claims 1 to 3, **characterized in that** the screening device (3) used is a screen classifier, a vibrating screen or a cyclone screen.

6. Method for dehulling rapeseeds according to Claim 4, **characterized in that** the screening areas are arranged one above another, wherein the upper screening area has in each case a larger mesh width than the lower screening area.

7. Method for dehulling rapeseeds according to Claim 6, **characterized in that** screening areas having a mesh width of at most 3 mm, preferably 1.0 mm to 0.6 mm are used.

8. Method for dehulling rapeseeds according to one or more of the preceding claims, **characterized in that** the pin-disc mill used is a wide chamber mill having pin discs.

9. Method for dehulling rapeseeds according to at least one of the preceding claims, **characterized in that** a distance d of at most 200 mm, preferably 40-60 mm is set between the grinding discs (1.2, 1.3).

10. Method for dehulling rapeseeds according to at least one of the preceding claims, **characterized in that** the pin length of the pins of the pin-disc mill is at most 200 mm, preferably 40-50 mm.

11. Apparatus for carrying out the method according to one or more of the preceding claims, which has at least one pin-disc mill (1), a classifying apparatus (2) and a screening apparatus (3).

12. Use of the hull parts obtained from the method according to one or more of Claims 1 to 10, **characterized in that** the hull parts are used as biomass for a solid fuel furnace for producing thermal energy.

## Revendications

1. Procédé pour décortiquer des semis de colza, comprenant au moins les étapes suivantes :
- production de semis de colza à partir graines de colza comprenant une partie d'enveloppe et une amande centrale,
- introduction des semis de colza dans un broyeur à impact (1),
- concassage mécanique des parties d'enveloppe des semis de colza dans le broyeur à impact (1),
- évacuation du produit broyé, constitué de parties concassées d'enveloppe et d'amande centrale, hors du broyeur à impact (1),
- introduction du produit broyé dans un dispositif de triage (2) et séparation des parties d'enveloppe des parties d'amande centrale,
- évacuation des parties d'enveloppe et des parties d'amande centrale hors du dispositif de triage (2),
- introduction des parties d'enveloppe dans un dispositif de tamisage (3) pour séparer davantage les résidus d'amande centrale des parties d'enveloppe,
- évacuation séparée des parties d'enveloppe et des parties d'amande centrale hors du dispositif de tamisage (3),
**caractérisé en ce qu'**un broyeur à disques à broches est utilisé en tant que broyeur à impact, lequel broyeur à disques à broches comprend au moins deux disques de broyage rotatifs (1.2, 1.3) qui sont disposés à une distance d l'un de l'autre et qui viennent en prise l'un dans l'autre par leurs broches, et qui peuvent tourner à des vitesses de rotation différentes.

2. Procédé pour décortiquer des semis de colza selon la revendication 1, **caractérisé en ce que** des parties d'enveloppe sont à nouveau introduites dans le broyeur à impact (1).

3. Procédé pour décortiquer des semis de colza selon la revendication 1 ou 2, **caractérisé en ce qu'**on utilise en tant que dispositif de triage (2) un dispositif de triage à air, de préférence un dispositif de triage à air en zig-zag ou un dispositif de triage électromagnétique.

4. Procédé pour décortiquer des semis de colza selon l'une quelconque des revendications 1 à 3, **caractérisé en ce qu'**on utilise en tant que dispositif de tamisage (3) un dispositif de tamisage basculant, de préférence comprenant au moins un plateau de tamisage (3.2, 3.3, 3.4) pourvu d'une surface de tamisage, de manière particulièrement préférée comprenant deux ou plus de deux plateaux de tamisage pourvus d'une surface de tamisage respective.

5. Procédé pour décortiquer des semis de colza selon l'une quelconque des revendications 1 à 3, **caractérisé en ce qu'**on utilise en tant que dispositif de tamisage (3) un trieur à tamis, un tamis oscillant ou un tamis à cyclone.

6. Procédé pour décortiquer des semis de colza selon la revendication 4, **caractérisé en ce que** les surfaces de tamisage sont superposées, la surface de tamisage supérieure présentant respectivement une ouverture de maille plus grande que la surface de tamisage inférieure.

7. Procédé pour décortiquer des semis de colza selon la revendication 6, **caractérisé en ce que** des surfaces de tamisage présentant une ouverture de maille d'au maximum 3 mm, de préférence de 1,0 mm à 0,6 mm sont utilisées.

8. Procédé pour décortiquer des semis de colza selon l'une quelconque ou plusieurs des revendications précédentes, **caractérisé en ce qu'**on utilise en tant que broyeur à disques à broches un broyeur à chambres larges pourvu de disques à broches.

9. Procédé pour décortiquer des semis de colza selon au moins l'une quelconque des revendications précédentes, **caractérisé en ce qu'**une distance d d'au maximum 200 mm, de préférence de 40 à 60 mm est ajustée entre les disques de broyage (1.2, 1.3).

10. Procédé pour décortiquer des semis de colza selon au moins l'une quelconque des revendications précédentes, **caractérisé en ce que** la longueur des broches du broyeur à disques à broches vaut au maximum 200 mm, de préférence de 40 à 50 mm.

11. Dispositif pour mettre en oeuvre le procédé selon l'une quelconque ou plusieurs des revendications précédentes, lequel comprend au moins un broyeur à disques à broches (1), un dispositif de triage (2) et un dispositif de tamisage (3).

12. Utilisation des parties d'enveloppe obtenues à partir du procédé selon l'une quelconque ou plusieurs des revendications 1 à 10, **caractérisée en ce que** les parties d'enveloppe sont utilisées en tant que biomasse pour une installation de chauffage à combustible solide destinée à générer de l'énergie thermique.
